# EUROPÄISCHE PATENTSCHRIFT

(11) **EP 0 749 877 B1**
(45) Veröffentlichungstag und Bekanntmachung des Hinweises auf die Patenterteilung: **25.03.1998**
(21) Anmeldenummer: 96108378.9
(22) Anmeldetag: 25.05.1996
(51) Int. Cl.: B61C 9/46, H02K 7/14, H02K 21/12

(54) **Transversalflussmaschine zum Einsatz in einem Direktantrieb für Fahrzeuge, insbesondere Bahnantrieb**
Transversal flux machine to be employed in a vehicle direct drive, in particular a railway traction drive
Machine à flux transversal pour l'emploi dans un entraînement direct de véhicule, en particulier l'entraînement d'un chemin de fer

(30) Priorität: 23.06.1995 DE 19522382
(43) Veröffentlichungstag der Anmeldung: 27.12.1996
(73) Patentinhaber: Voith Turbo GmbH, 89522 Heidenheim (DE)
(72) Erfinder: Lange, Andreas, 89522 Heidenheim (DE); Koll, Stefan, 89073 Ulm (DE)
(74) Vertreter: Weitzel, Wolfgang, Dr.-Ing. Patentanwalt

(56) Entgegenhaltungen:
- EP-A- 0 413 337
- EP-A- 0 464 929
- WO-A-90/09697
- WO-A-92/10023
- FR-A- 568 856
- RGE REVUE GENERALE DE L'ELECTRICITE , Nr. 4, April 1991, PARIS, FR, Seiten 71-75, XP000227590 A.GUERAUD & AL.: "Evolution des performances et nouvelles applications des machines à aimants permanents"

## Beschreibung

Die Erfindung betrifft eine Transversalflußmaschine zum Einsatz in einem Direktantrieb für Fahrzeuge, insbesondere Bahnantrieb im einzelnen mit den Merkmalen aus dem Oberbegriff des Anspruchs 1 (siehe auch WO-A-90/09697).

Beim Einsatz von Fahrmotoren als Direktantrieb ist der zulässige Außendurchmesser des Motors in erster Linie durch die Bodenfreiheit, d.h. den zur Verfügung stehenden Bauraum zwischen Achse und Radaufsatzfläche gegeben. Ein Beispiel dafür ist der Direktantrieb einer Achse in einem Schienenfahrzeug. Es ist bekannt, daß ein großer Vorteil hinsichtlich der übertragbaren Leistung erzielt werden kann, wenn es möglich ist, den Fahrmotor im Bodenbereich abzuplatten (siehe FR-A-568856). Bei Direktantrieben mit Drehfeldmotoren geht eine Abplattung mit einem massiven Eingriff in den magnetischen Kreis einher. Der Grund dafür ist die räumliche Bewegung des magnetischen Flußvektors im Rückenbereich.

Bei den üblicherweise als Bahnmotoren zur Anwendung kommenden Asynchron- oder Reihenschlußmotoren wird der magnetische Rückenbereich dabei in einer Weise abgeplattet, daß das magnetische Drehfeld des Motors auch in diesem Bereich nicht gestört wird. Die erhöhte thermische Belastung in den abgeplatteten Randbereichen wird durch geeignete Kühlmaßnahmen, beispielsweise durch die Durchzugsbelüftung mit ihren Bohrungen im Statorblechpaket, kompensiert. Geht jedoch die Kühlart der Maschine nicht in den Durchmesser der Maschine ein, werden dieser Abplattung aufgrund der elektromagnetischen Anforderungen enge Grenzen gesetzt.

Der Erfindung liegt deshalb die Aufgabe zugrunde, einen Direktantrieb derart zu gestalten, daß die genannten Nachteile vermieden werden. Dabei soll bei effektiver Ausnutzung des vorhandenen Bauraumes die übertragbare Leistung erhöht werden.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Die Erfinder haben erkannt, daß der Einsatz einer Transversalflußmaschine für einen Direktantrieb, beispielsweise einen Bahnantrieb, aufgrund ihrer Eigenart, nämlich dem Fehlen eines magnetischen Drehfeldes, eine Abplattung der Maschine mit geringem Aufwand zur Beseitigung der damit verbundenen magnetischen Endeffekte ermöglicht. Erfindungsgemäß kann die Abplattung im wesentlichen durch folgende Maßnahmen erreicht werden:
1. bei Anordnung von Statorweicheisenelementen mit im wesentlichen gleichen Abständen bzw. gleicher Teilung am Außenumfang des Rotors unter Berücksichtigung des Luftspaltes durch Fehlen von Statorweicheisenelementen bzw. Polschuhen am Außendurchmesser in Einbaulage der Transversalflußmaschine im Bodenbereich oder/und
2. Ausschwenken von Statorweicheisenelementen bzw. Polschuhen des Außenstators im Bodenbereich aus ihrer zum Luftspalt zwischen Stator und Rotor orthogonalen Achse.

Aufgrund dieser Maßnahmen entsteht ein Bereich mit einem vergrößerten Zwischenraum als durch die Teilung bedingt zwischen zwei einander benachbarten Statorweicheisenelementen, welcher als magnetische Bodenlücke bezeichnet werden kann. Der Rotor trägt nach wie vor in bekannter Weise sämtliche Pole bzw. Polstrukturen, der Stator dementsprechend weniger, so daß der Zwischenraum zwischen zwei einander benachbarten Statorweicheisenelementen in Einbaulage im Bodenbereich gegenüber den restlichen wesentlich vergrößert ist. Dadurch wird erreicht, daß die Transversalflußmaschine im allgemeinen größer gebaut werden kann, da der Außendurchmesser des Rotors sich bis in den Grenzbereich des maximal zulässigen Bauraumes erstrecken kann. Die im allgemeinen übliche Ankerwicklung am Außenstator entfällt, was mit einer Verringerung der thermischen Belastung einhergeht. Der Vorteil besteht des weiteren darin, daß in dem beschriebenen Bereich der Bodenlücke keine Überlagerung von Anker- und Erregerfeld stattfindet, da die magnetischen Pfade hierfür aufgrund des Fehlens der Statorweicheisenelemente im Innen- und Außenstator nicht vorhanden sind. Es ist somit in einfacher Weise möglich, und zwar durch Messung des Rotorfeldes, z.B. Hall-Sonden, die Pollageerfassung zu realisieren. Auf externe zusätzliche Elemente, wie Resolver und Inkrementalgeber, kann dabei verzichtet werden. Dies bietet einen enormen Vorteil bei der Verwendung von Hohlwellenmotoren, welche nach dem Transversalflußprinzip arbeiten.

Zusätzlich zum Fehlen von Statorweicheisenelementen können die der Lücke benachbarten Statorweicheisenelemente bzw. Polschuhe des Außenstators aus ihrer zum Luftspalt orthogonalen Achse von der Bodenlücke weg verschwenkt werden. Es kann somit ein günstiger Kompromiß zwischen der Größe der Lücke und dem störenden Einfluß dieser realisiert werden. Die verschwenkten Statorweicheisenelemente bzw. Polschuhe im Einlaufbereich der Lücke können bei alleinigem oder zusätzlichem Verschwenken mit geringerer Breite als der Rotor ausgeführt werden. Durch Anfasungen an den Flanken werden Wirbelstromverluste beim Eindringen des Rotorfeldes vermieden. Des weiteren sind erfindungsgemäß Mittel vorgesehen, welche die mit der Bodenlücke einhergehenden magnetischen Endeffekte in einfacher Weise ausgleichen.

Zur Vermeidung des Skineffektes in den Leitern der Wicklungen wird die Ankerwicklung am Innenstator im Lückenbereich vorzugsweise gekröpft ausgeführt, um damit einen vergrößerten Abstand des Leiters vom Rotor zu erreichen.

Zur Führung des Rotorfeldes ist ein Flußleitstück im Bereich der Lücke vorgesehen. Dieses kann sich axial auf beiden Seiten der Ankerwicklung des Innenstators, im wesentlichen über einen Bereich, welcher dem des Erstreckungswinkels in Umfangsrichtung des Bereiches mit vergrößertem Zwischenraum am Außenstator entspricht, erstrecken. Das Flußleitstück kann dabei aus geblechtem Trafoeisen oder aber aus Pulververbundwerkstoff hergestellt sein. Es dient neben der Gewährleistung eines definierten Arbeitspunktes der Permanentmagneten auch der magnetischen Abschirmung gegenüber der konstruktiven Umgebung.

Des weiteren besteht die Möglichkeit, ein weiteres Flußleitstück in Form eines dünnwandigen Schirmes ebenfalls aus geblechtem Trafoeisen oder aus Pulververbundwerkstoff im Bereich der Lücke am Außendurchmesser des Rotors vorzusehen. Dies bietet den Vorteil, daß das Eindringen des Rotorstreufeldes in die Gehäuseteile weitgehendst vermieden werden kann. In Analogie gilt diese Aussage auch für das Vorsehen eines in axialer Richtung in Höhe der Lücke neben dem Rotor angeordneten axialen Flußleitstückes. Da üblicherweise der Rotor bzw. die Polkörperstrukturen in axialer Richtung zur Festigung von einem Endring begrenzt werden, ist das axiale Flußleitstück in möglichst geringem Abstand neben diesem anzuordnen.

Die erfindungsgemäße Lösung der Aufgabe wird nachfolgend anhand von Figuren erläutert. Darin ist im übrigen folgendes dargestellt:
- Figuren 1a und 1b: verdeutlichen anhand einer konventionell ausgeführten Transversalflußmaschine die in einem Direktantrieb auftretenden Probleme;
- Figur 2: zeigt eine erfindungsgemäße Bodenlücke im Querschnitt mit gekröpfter Wicklung und verschwenkten Außenstatorweicheisenelementen;
- Figur 3: verdeutlicht eine Ausführung eines der Lücke benachbarten Statorweicheisenelementes;
- Figur 4: verdeutlicht eine Bodenlücke im Querschnitt mit zusätzlichem Flußleitstück und außenliegendem Schutzschirm;
- Figur 5: verdeutlicht eine Bodenlücke im Querschnitt mit zusätzlichem axialen Flußleitstück.

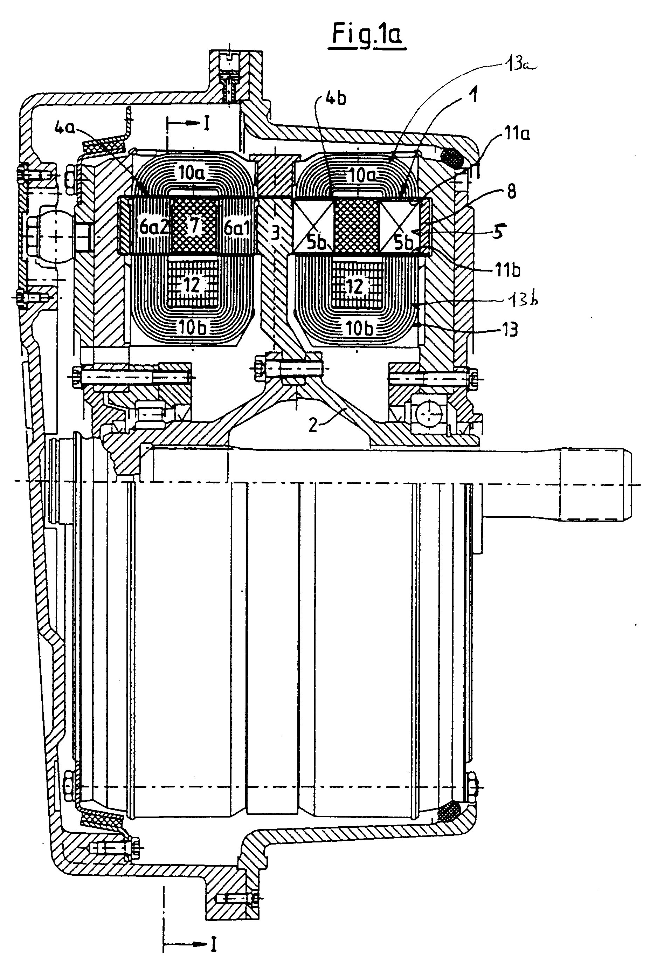

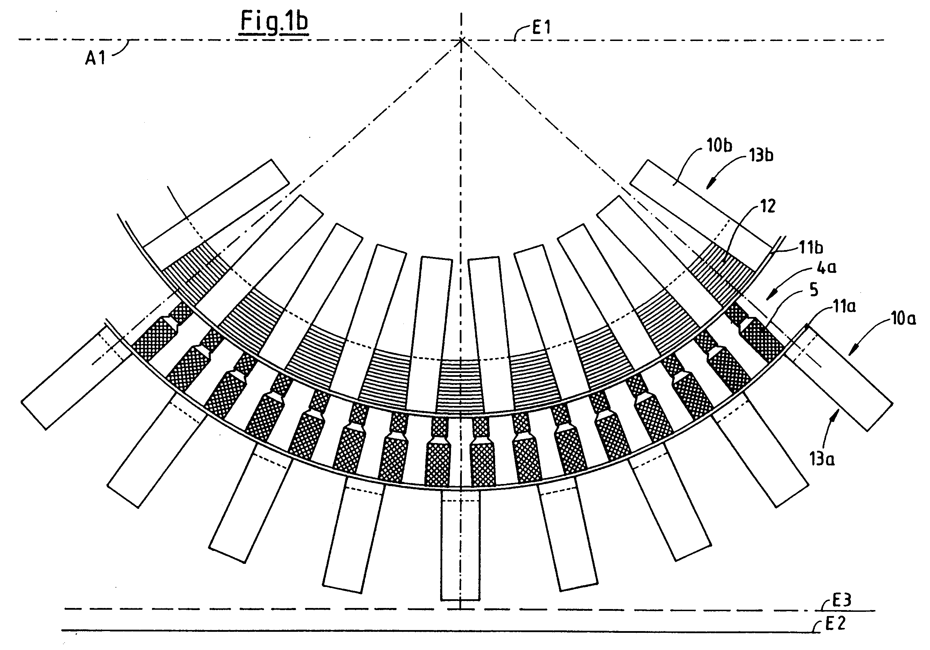

In den Figuren 1a und 1b ist nochmals der Grundaufbau einer konventionell ausgeführten Transversalflußmaschine erläutert und die Problematik beim Einsatz in einem Direktantrieb.

In der Figur 1a ist ein Längsschnitt durch eine Transversalflußmaschine dargestellt, bei der in einem Gehäuse ein Rotor 1 mit einer Rotorwelle 2 und einem Abtriebsflansch drehbar gelagert ist. Die Rotorwelle weist im zentralen Teil einen Bund auf, an der eine kreisrunde zentrale Trägerscheibe 3 befestigt ist. Am radial äußeren Umfang dieser Trägerscheibe 3 erstrecken sich beidseitig in axialer Richtung ringförmige bzw. trommelförmige Polkörperstrukturen, hier 4a und 4b. Diese Polkörperstrukturen 4a und 4b umfassen jeweils in zwei Reihen angeordnet und wechselweise in Umfangsrichtung polarisierte Permanentmagnete 5a, für die Polkörperstruktur 4a, und 5b für die Polkörperstruktur 4b, sowie Weicheisenelemente. Die Weicheisenelemente sind hier für die Polkörperstruktur 4a mit 6a1 und 6a2 bezeichnet und für die Polkörperstruktur 4b ebenfalls mit 6b1 und 6b2, jedoch nicht dargestellt. In axialer Richtung ist die jeweilige Polkörperstruktur 4a und 4b wie folgt aufgebaut: Von der Trägerscheibe 3 aus erstreckt sich zunächst eine erste Reihe von Permanentmagneten 5 bzw. Weicheisenelementen 6, woran sich ein Zwischenring 7 anschließt, sowie eine zweite Reihe von Permanentmagneten 5 bzw. Weicheisenelementen 6, daran anschließend ein Endring 8.

Radial innerhalb und außerhalb der Polkörperstrukturen 4a und 4b sind ein Innen- und ein Außenstator 13b und 13a, umfassend eine Vielzahl von in Umfangsrichtung der Polkörperstrukturen angeordneten Statorweicheisenelementen 10 am Statorgehäuse vorgesehen. Die radial außerhalb liegenden Statorweicheisenelemente sind dabei mit 10a und die radial innerhalb liegenden Statorweicheisenelemente mit 10b bezeichnet. Die einzelnen Statorweicheisenelemente sind derart angeordnet, daß zu den Polkörperstrukturen 4a und 4b radiale Luftspalte 11 entstehen. Dabei sind wieder die radial innerhalb liegenden Luftspalte mit 11b und die radial außerhalb liegenden Luftspalte mit 11a bezeichnet. Die Statorweicheisenelemente 10b und 10a sind über den ganzen Umfang verteilt und von Wicklungen 12 durchsetzt. Sie bilden einen im Statorgehäuse fest angeordneten Stator 13 des Motors.

Die Figur 1b zeigt einen Teilschnitt I-I durch eine in Figur 1a dargestellte konventionelle Transversalflußmaschine. Aus Vereinfachungsgründen ist die Ankerwicklung nicht vollständig dargestellt. Hierbei wird die Problematik eines Einsatzes einer Transversalflußmaschine in einem Direktantrieb verdeutlicht. Die Grenzen werden dabei durch den Abstand zwischen einer Ebene E1, welche durch die Achse A1, die im allgemeinen der Antriebsachse entspricht, und einer Horizontalen beschrieben werden kann, und einer Ebene E3, deren Lage unter Berücksichtigung der möglichen auftretenden Schwingungen gegenüber einer Ebene E2 festgelegt werden kann, welche bei Fahrzeugen der Aufstandsebene der Räder entspricht, bestimmt. Der Abstand zwischen der Ebene E1 und der Ebene E3 in vertikaler Richtung begrenzt die Größe der einzusetzenden Transversalflußmaschine. Der Abstand zwischen der Ebene E1 und der Ebene E3 bildet den Bereich, welcher den Einbau einer Transversalflußmaschine in einem Direktantrieb erlaubt, ohne daß bei Erschütterungen oder dergleichen ein Aufsetzen der Transversalflußmaschine an deren Außenumfang am Boden erfolgt. Daraus wird ersichtlich, daß sowohl Stator- und Rotorgröße berücksichtigt werden müssen. Eine Auslegung der Transversalflußmaschine kann deshalb nur hinsichtlich ihrer Außenabmessung erfolgen, wodurch deren Einsatz hinsichtlich der Randbedingung Größe und damit auch der Leistung begrenzt ist.

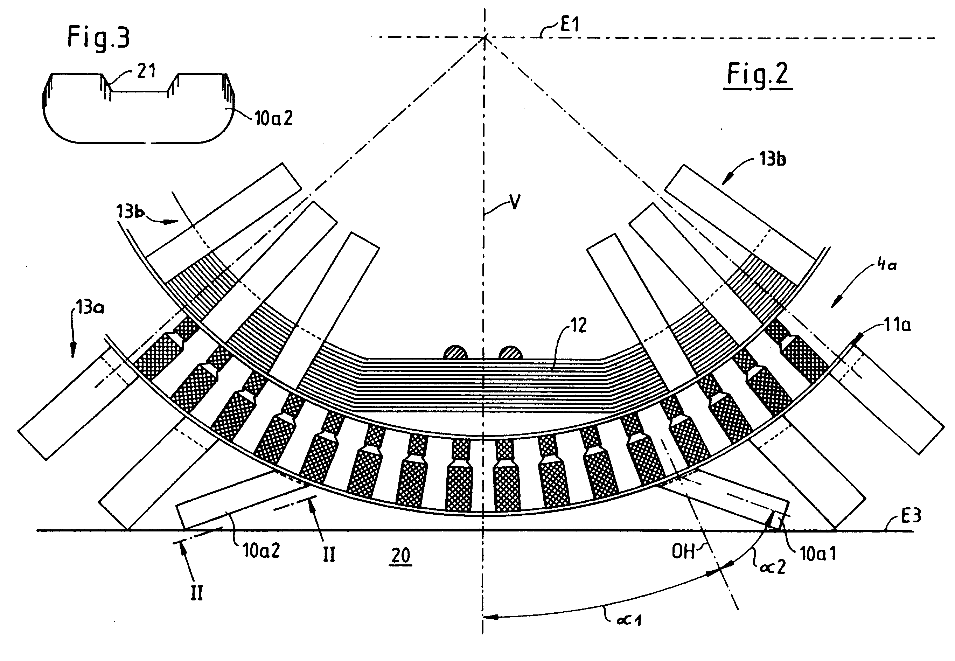

Die Figuren 2 bis 4 verdeutlichen eine erfindungsgemäße Ausführung einer Transversalflußmaschine in einem Teilschnitt durch die Transversalflußmaschine in axialer Richtung mit sogenannter Bodenlücke. Der Grundaufbau der Transversalflußmaschine entspricht dabei dem einer konventionellen, wie in Figur 1 beschrieben. Für gleiche Elemente werden deshalb die gleichen Bezugszeichen verwendet.

Der Teilschnitt ist in Einbaulage der Transversalflußmaschine dargestellt, wobei die Ebene E1 die Ebene verdeutlicht, in welcher die Antriebswelle angeordnet ist. Der Rotor trägt in bekannter Weise sämtliche Pole, die Polkörperstrukturen 4a und 4b, bezogen auf die Figur 1a, hier jedoch nur 4a dargestellt, bleiben somit in ihrem Aufbau unverändert. Erfindungsgemäß erfolgt eine Abplattung der Transversalflußmaschine, in Einbaulage betrachet, in Bodennähe. Zu diesem Zweck werden am Außenstator 13a in radialer Richtung außerhalb der Polkörperstruktur 4a Statorweicheisenelemente weggelassen, d.h. die Anordnung von Statorweicheisenelementen erfolgt derart, daß am Außenstator 13a wenigstens ein Bereich 20 (Lücke) mit einem größeren als durch die Teilung bedingten Zwischenraum zwischen zwei einander benachbarten Statorweicheisenelementen, hier der Statorweicheisenelemente 10a1 und 10a2 entsteht.

Des weiteren ist der Außenstator 13a frei von Ankerwicklungen. Der Außenstator 13a erfährt somit im Bodenbereich eine hinsichtlich der magnetischen Eigenschaften wirksame Unterbrechung, die sich beidseitig gegenüber einer Vertikalen V in Einbaulage beispielsweise über einen Winkel α1 betrachtet erstreckt. In diesem Bereich findet dann keine Überlagerung von Anker- und Erregerfeld statt, da die magnetischen Pfade hierfür fehlen. Dies bietet den Vorteil, daß der im Vergleich beim Einsatz einer konventionellen Transversalflußmaschine zur Verfügung stehende Bauraum, welcher dem Abstand zwischen den beiden Ebenen E1 und E3 entspricht, fast vollständig für den Rotor ausgenutzt werden kann. Daraus resultiert eine in ihrer Baugröße größere Transversalflußmaschine, welche höhere Leistungen erzeugen kann.

Die Figur 2 verdeutlicht jedoch neben der erfindungsgemäßen Bodenlücke eine Reihe weiterer vorteilhafter Ausgestaltungsmöglichkeiten. So ist es beispielsweise möglich, die der Bodenlücke benachbarten Statorweicheisenelemente 10a1 und 10a2, d.h. Polschuhe des Außenstators 13a aus ihrer zum Luftspalt 11a orthogonalen Achse OH um einen Winkel α2 zu verschwenken. Im dargestellten Fall sind dies die Statorweicheisenelemente bzw. Polschuhe des Außenstators 10a1 und 10a2. Dies bietet den Vorteil einer verringerten Bodenlücke bei gleichbleibender Bodenfreiheit.

In diesem Zusammenhang besteht jedoch auch die Möglichkeit, die Polschuhe 10a1 und 10a2 mit geringerer Eisenbreite als der des Rotors auszuführen. Durch entsprechende Anfassungen an den Flanken, werden Wirbelstromverluste beim Eindringen des Rotorfeldes vermieden. Eine Möglichkeit einer derartigen Gestaltung eines Polschuhes ist nicht maßstäblich in der Figur 3 als Ansicht II-II aus Figur 2 dargestellt. Das Statorweicheisenelement 10a2 weist angeschrägt ausgeführte Kanten 21 aus.

Um den Skineffekt in den Leitern aufgrund des Rotorfeldes zu vermeiden, kann die Ankerwicklung im Lückenbereich am Innenstator 13b gekröpft ausgeführt werden. Damit wird ein vergrößerter Abstand der Leiter, d.h. der einzelnen Bestandteile der Ankerwicklung, vom Rotor 1 erzielt und die Beeinflussung der Ankerwicklung durch den Rotor 1 verringert.

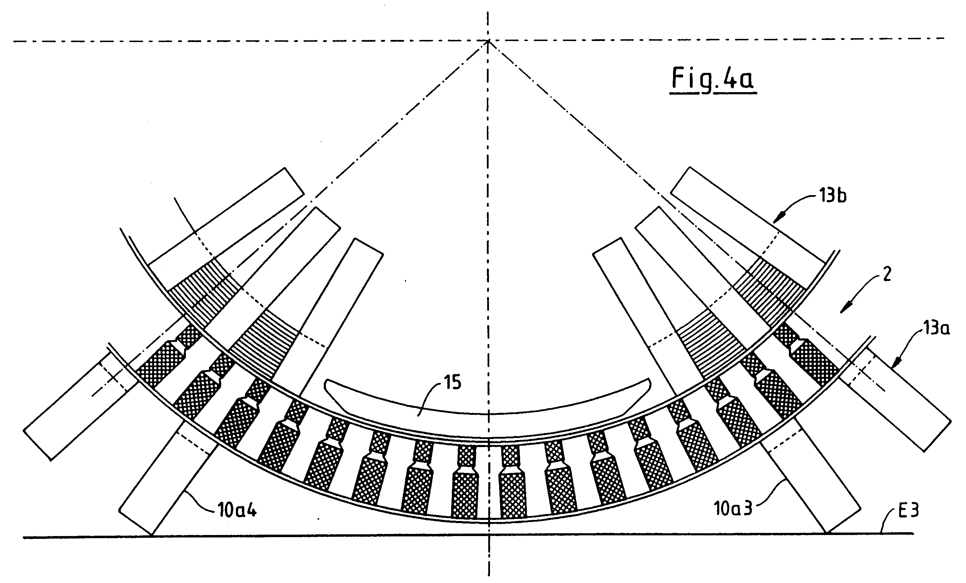

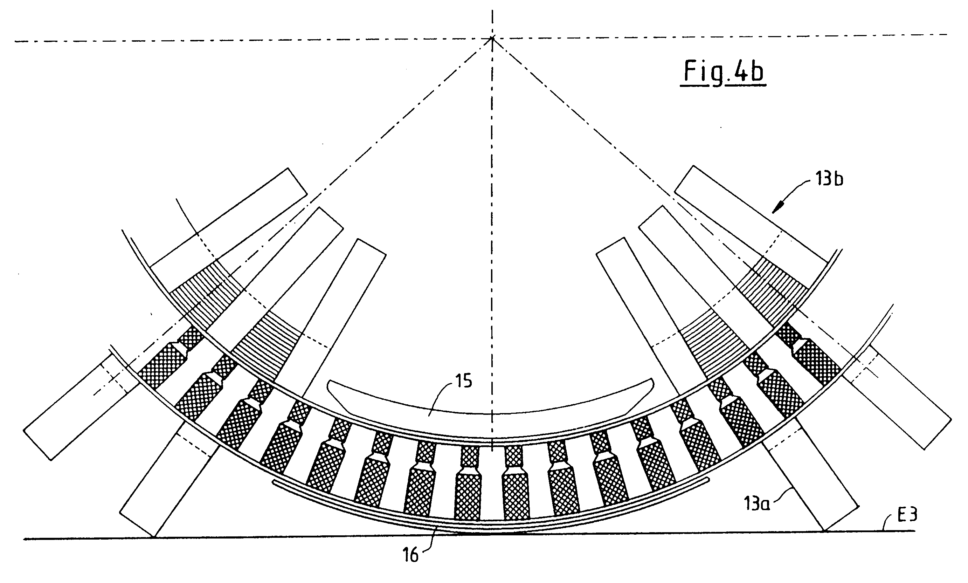

Die Figur 4a verdeutlicht eine Möglichkeit der Leitung des Rotorfeldes, indem im Bereich der Lücke am Innenstator 13b ein Flußleitstück 15, welches beispielsweise aus geblechtem Trafoeisen oder aus einem Pulververbundwerkstoff hergestellt sein kann, zur Führung des Rotorfeldes angeordnet ist. Das Flußleitstück 15 ist dabei im wesentlichen im Bereich des Außenumfanges des Innenstators 13b angeordnet. Die Wicklungen werden normal geführt. Auf die Darstellung der Wicklungen, die gekröpft ausgeführt sein können, am Innenstator 13b im Erstreckungsbereich der Lücke 20 wurde aus Gründen einer übersichtlichen Darstellung verzichtet. Zusätzlich kann, wie in Figur 4b dargestellt, zur Verhinderung des Eindringens des Rotorstreufeldes in die Gehäuseteile im Bereich des Innendurchmessers des Außenstators 13a im Bereich der Bodenlücke ein dünnwandiger Schirm 16 aus ähnlichen Materialien eingesetzt werden.

Die in den Figuren 3 und 4 dargestellten Möglichkeiten sind auch für die in der Figur 2 dargestellten Varianten einsetzbar.

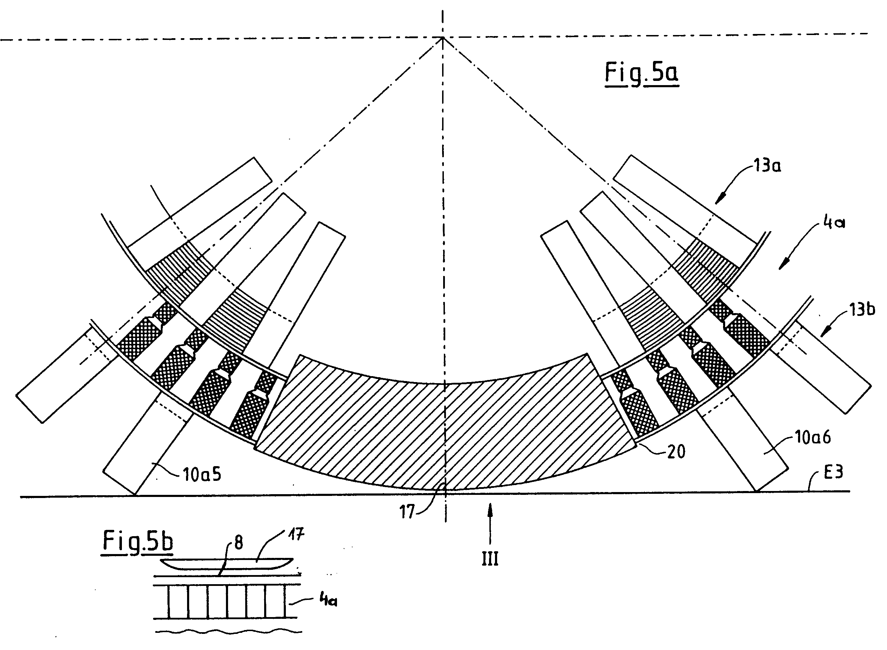

In den Figuren 5a und 5b ist die Verwendung eines axialen Flußleitstückes 17 schematisch verdeutlicht. Der Grundaufbau von Rotor 1 und Stator 13 entpricht dem in den Figuren 1, 2 und 4, weshalb für gleiche Elemente die gleichen Bezugszeichen verwendet werden. In axialer Richtung neben dem Rotor 1 ist ein Flußleitstück 17 radial in Höhe der Lücke bzw. des vergrößerten Zwischenraumes 20 zwischen zwei einander benachbarten Statorweicheisenelementen, hier der Statorweicheisenelemente 10a5 und 10a6, angeordnet.

Die Figur 5b verdeutlicht in einer Ansicht III entsprechend Figur 5a eine Draufsicht auf eine Polstruktur 4 eines Rotors 1 einer Transversalflußmaschine. daraus wird ersichtlich, daß das axiale Flußleitstück zur Gewährleistung der diesem zugedachten Funktion nur in einem sehr geringen Abstand neben einem, der Polstruktur 4 zugeordneten Endring 8, angeordnet sein darf.

## Patentansprüche

1. Transversalflußmaschine
1.1 mit einem Außenstator (13a), umfassend eine Mehrzahl von äußeren Stator-Weicheisenelementen (10a), die im wesentlichen mit gleichmäßiger Teilung zueinander angeordnet sind;
1.2 mit einem Innenstator (13b), umfassend eine Mehrzahl von inneren Stator-Weicheisenelementen (10b);
1.3 der Innenstator (13b) umfaßt wenigstens eine Ankerwicklung (12);
1.4 mit einem Rotor (1), der - in einem achssenkrechten Schnitt gesehen - aus miteinander abwechselnden Magneten (5) und Weicheisenelementen (6) aufgebaut ist;
gekennzeichnet durch die folgenden Merkmale:
1.5 der Außenstator (13a) ist frei von Ankerwicklungen;
1.6 die äußeren Statorweicheisenelemente (10a) sind derart angeordnet, daß am Außenstator (13a) wenigstens ein Bereich (Lücke) (20) mit einem größeren als durch die Teilung bedingten Zwischenraum zwischen zwei einander benachbarten Statorweicheisenelementen vorgesehen ist;
1.7 dem Bereich (20) sind wenigstens mittelbar Mittel zur Kompensation magnetischer Endeffekte zugeordnet.

2. Transversalflußmaschine nach Anspruch 1, dadurch gekennzeichnet, daß der Bereich durch das entgegengesetzte Verschwenken wenigstens zweier einander benachbarter äußerer Statorweicheisenelemente aus deren orthogonalen Lage (OH) zu einem zwischen Rotor (1) und Stator (13) gebildeten Luftspalt erfolgt.

3. Transversalflußmaschine nach Anspruch 2, dadurch gekennzeichnet, daß wenigstens die dem Bereich (20) unmittelbar benachbarten Statorweicheisenelemente (10a1, 10a2) eine geringere Stärke aufweisen.

4. Transversalflußmaschine nach Anspruch 1, dadurch gekennzeichnet, daß der Bereich (20) durch das Fehlen wenigstens eines äußeren Statorweicheisenelementes erzeugt wird.

5. Transversalflußmaschine nach Anspruch 4, dadurch gekennzeichnet, daß wenigstens die dem Bereich (20) benachbarten äußeren Statorweicheisenelemente (10a1, 10a2) aus deren zum Luftspalt orthogonalen Lage (OH) ausgeschwenkt werden.

6. Transversalflußmaschine nach einem der Ansprüche 4 oder 5, dadurch gekennzeichnet, daß wenigstens die dem Bereich (20) unmittelbar benachbarten Statorweicheisenelemente eine geringere Stärke aufweisen.

7. Transversalflußmaschine nach einem der Ansprüche 1 bis 6, dadurch gekennzeichnet, daß die Ankerwicklung (12) des Innenstators (13b) wenigstens in einem Teil eines Bereiches, welcher durch einen Erstreckungswinkel, der dem der Lücke in Umfangsrichtung des Außenstators entspricht, am Innenstator beschrieben werden kann, gekröpft ausgeführt ist.

8. Transversalflußmaschine nach einem der Ansprüche 1 bis 7, dadurch gekennzeichnet, daß dem Bereich mit einem größeren als durch die Teilung bedingten Zwischenraum zwischen zwei einander benachbarten Statorweicheisenelementen am Außenstator mittelbar wenigstens ein Flußleitstück (15, 17) zugeordnet ist.

9. Transversalflußmaschine nach Anspruch 8, dadurch gekennzeichnet, daß das Flußleitstück (15) zwischen der Ankerwicklung (12) des Innenstators (13b) und dem Rotor (1) angeordnet ist.

10. Transversalflußmaschine nach Anspruch 8 oder 9, dadurch gekennzeichnet, daß das Flußleitstück (17) in geringem Abstand in axialer Richtung neben dem Rotor angeordnet ist.

11. Transversalflußmaschine nach Anspruch 8 oder 9, dadurch gekennzeichnet, daß in radialer Richtung am Außenumfang des Rotors im Bereich der Lücke (20) ein Schirm (16) angeordnet ist.

12. Transversalflußmaschine nach einem der Ansprüche 8 bis 11, dadurch gekennzeichnet, daß das Flußleitstück (15, 17) aus geblechtem Trafoeisen besteht.

13. Transversalflußmaschine nach einem der Ansprüche 8 bis 11, dadurch gekennzeichnet, daß das Flußleitstück (15, 17) aus einem Pulververbundwerkstoff besteht.

## Claims

1. Transverse flux machine
1.1 with an external stator (13a), comprising a plurality of external stator soft iron elements (10a) which are essentially arranged with uniform spacing relative to one another;
1.2 with an internal stator (13b), comprising a plurality of internal stator soft iron elements (10b);
1.3 the internal stator (13b) comprises at least one armature winding (12);
1.4 with a rotor (1), which - viewed in an axially perpendicular section - is composed from alternating magnets (5) and soft iron elements (6);
characterised by the following features:
1.5 the external stator (13a) is free of armature windings;
1.6 the external stator soft iron elements (10a) are arranged so that on the external stator (13a) at least one region (gap) (20) is provided with an interstice larger than determined by the spacing between two adjacent stator soft iron elements;
1.7 means for compensating magnetic end effects are allocated at least directly to the region (20).

2. Transverse flux machine according to Claim 1, characterised in that the region occurs as a result of the opposed swivelling of at least two adjacent external stator soft iron elements out of their orthogonal position (OH) to an air gap formed between the rotor (1) and stator (13).

3. Transverse flux machine according to Claim 2, characterised in that at least the stator soft iron elements (10a1, 10a2) directly adjacent to the region (20) have a relatively low thickness.

4. Transverse flux machine according to Claim 1, characterised in that the region (20) is formed by the absence of at least one external stator soft iron element.

5. Transverse flux machine according to Claim 4, characterised in that at least the external stator soft iron elements (10a1, 10a2) adjacent to the region (20) are swivelled out of their position (OH) orthogonal to the air gap.

6. Transverse flux machine according to one of Claims 4 or 5, characterised in that at least the stator soft iron elements directly adjacent to the region (20) have a relatively low thickness.

7. Transverse flux machine according to one of Claims 1 to 6, characterised in that the armature winding (12) of the internal stator (13b) is bent at right angles at least in one portion of a region, which can be described on the internal stator by an angle of extension corresponding to the gap in circumferential direction of the external stator.

8. Transverse flux machine according to one of Claims 1 to 7, characterised in that at least one flux conducting piece (15, 17) is directly allocated to the region with a larger interstice than determined by the spacing between two adjacent stator soft iron elements on the external stator.

9. Transverse flux machine according to Claim 8, characterised in that the flux conducting piece (15) is arranged between the armature winding (12) of the internal stator (13b) and the rotor (1).

10. Transverse flux machine according to Claim 8 or 9, characterised in that the flux conducting piece (17) is arranged at a short distance next to the rotor in axial direction.

11. Transverse flux machine according to Claim 8 or 9, characterised in that a screen (16) is arranged in radial direction on the outer circumference of the rotor in the region of the gap (20).

12. Transverse flux machine according to one of Claims 8 to 11, characterised in that the flux conducting piece (15, 17) is made of laminated transformer iron.

13. Transverse flux machine according to one of Claims 8 to 11, characterised in that the flux conducting piece (15, 17) is made of a powder composite.

## Revendications

1. Machine à flux transversal comprenant
1.1 un stator extérieur (13a), comportant de multiples éléments de stator extérieur en fer doux (10a) qui sont disposés essentiellement avec un pas uniforme de l'un à l'autre,
1.2 un stator intérieur (13b), comportant de multiples éléments de stator intérieur en fer doux (10b),
1.3 le stator intérieur (13b) comportant au moins un enroulement d'induit (12), et
1.4 un rotor (1) qui est constitué - vu suivant une coupe perpendiculaire à l'axe - d'aimants (5) et d'éléments en fer doux (6) alternant entre eux,
caractérisée par les particularités suivantes :
1.5 le stator extérieur (13a) est dépourvu d'enroulements d'induit,
1.6 les éléments de stator extérieur en fer doux (10a) sont disposés de façon que, sur le stator extérieur (13a), il soit prévu au moins une zone (lacune) (20) comportant un espace intermédiaire, plus grand que cela n'est rendu nécessaire par le pas, entre deux éléments de stator en fer doux voisins l'un de l'autre, et
1.7 des moyens servant à la compensation d'effets d'extrémité magnétiques sont associés, au moins indirectement, à ladite zone (20).

2. Machine à flux transversal suivant la revendication 1, caractérisée en ce que ladite zone est réalisée au moyen du basculement, dans des sens opposés, d'au moins deux éléments de stator extérieur en fer doux voisins l'un de l'autre à partir de leur position perpendiculaire (OH) par rapport à un entrefer formé entre le rotor (1) et le stator (13).

3. Machine à flux transversal suivant la revendication 2, caractérisée en ce qu'au moins les éléments de stator en fer doux (10a1, 10a2) directement voisins de ladite zone (20) ont une épaisseur plus faible.

4. Machine à flux transversal suivant la revendication 1, caractérisée en ce que ladite zone (20) est réalisée au moyen de l'absence d'au moins un élément de stator extérieur en fer doux.

5. Machine à flux transversal suivant la revendication 4, caractérisée en ce qu'au moins les éléments de stator extérieur en fer doux (10a1, 10a2) voisins de ladite zone (20) présentent un basculement à partir de leur position (OH) perpendiculaire à l'entrefer.

6. Machine à flux transversal suivant l'une des revendications 4 ou 5, caractérisée en ce qu'au moins les éléments de stator en fer doux directement voisins de ladite zone (20) ont une épaisseur plus faible.

7. Machine à flux transversal suivant l'une des revendications 1 à 6, caractérisée en ce que l'enroulement d'induit (12) du stator intérieur (13b) est réalisé d'une manière coudée au moins dans une partie d'une zone qui peut être décrite sur le stator intérieur par un angle d'extension qui est égal à celui de la lacune suivant la direction circonférentielle du stator extérieur.

8. Machine à flux transversal suivant l'une des revendications 1 à 7, caractérisée en ce que, sur le stator extérieur, au moins une pièce conduisant le flux (15, 17) est associée, au moins indirectement, à la zone comportant un espace intermédiaire, plus grand que cela n'est rendu nécessaire par le pas, entre deux éléments de stator en fer doux voisins l'un de l'autre.

9. Machine à flux transversal suivant la revendication 8, caractérisée en ce que la pièce conduisant le flux (15) est disposée entre l'enroulement d'induit (12) du stator intérieur (13b) et le rotor (1).

10. Machine à flux transversal suivant la revendication 8 ou 9, caractérisée en ce que la pièce conduisant le flux (17) est disposée à une faible distance suivant la direction axiale à côté du rotor.

11. Machine à flux transversal suivant la revendication 8 ou 9, caractérisée en ce qu'un écran (16) est disposé en direction radiale sur la périphérie extérieure du rotor dans la zone de la lacune (20).

12. Machine à flux transversal suivant l'une des revendications 8 à 11, caractérisée en ce que la pièce conduisant le flux (15, 17) est en fer pour transformateur feuilleté.

13. Machine à flux transversal suivant l'une des revendications 8 à 11, caractérisée en ce que la pièce conduisant le flux (15, 17) est en une matière composite en poudre.
